# FASCICULE DE BREVET EUROPEEN

(11) **EP 3 389 971 B1**
(45) Date de publication et mention de la délivrance du brevet: **29.07.2020**
(21) Numéro de dépôt: 16815618.0
(22) Date de dépôt: 30.11.2016
(51) Int. Cl.: B29B 11/14, B29C 49/64

(54) **PREFORME POURVUE D'UNE PORTION DE CORPS CONCAVE**
VORFORM MIT EINEM KONKAVEN KÖRPERTEIL
PREFORM PROVIDED WITH A CONCAVE BODY PORTION

(30) Priorité: 16.12.2015 FR 1562531
(43) Date de publication de la demande: 24.10.2018
(73) Titulaire: Sidel Participations, 76930 Octeville-sur-Mer (FR)
(72) Inventeur: BOUKOBZA, Michel, 76930 Octeville-sur-mer (FR); LETESTU, Mickaël, 76930 Octeville-sur-Mer (FR)
(74) Mandataire: Sidel Group
(86) Numéro de dépôt international: PCT/FR2016/053148
(87) Numéro de publication internationale: WO 2017/103372

(56) Documents cités:
- EP-A1- 0 978 456
- WO-A2-2012/092639
- DE-T2- 3 486 209
- US-A1- 2001 055 657
- DATABASE WPI Week 199931 Thomson Scientific, London, GB; AN 1999-371072 XP002760516, -& WO 99/28196 A1 (AK TECH LAB INC) 10 juin 1999 (1999-06-10)

## Description

L'invention a trait à a fabrication des récipients à partir de préformes en matière plastique, notamment en polytéréphtalate d'éthylène (PET).

Plus précisément, l'invention concerne une préforme destinée au formage d'un récipient par soufflage ou étirage soufflage, au sein d'un moule à l'empreinte du récipient ou de manière libre (c'est-à-dire en l'absence de moule).

Un récipient comprend ordinairement une paroi latérale généralement symétrique de révolution qui s'étend suivant un axe central, un col qui s'étend dans le prolongement de la paroi latérale et par lequel le récipient est destiné à être rempli et vidé, et un fond qui s'étend transversalement à partir d'une extrémité inférieure du corps et par lequel le récipient est destiné à reposer sur une surface plane.

Une préforme comprend ordinairement un corps de forme sensiblement cylindrique (destiné à former la paroi latérale du récipient), un col ouvert qui s'étend dans le prolongement du corps à partir d'une extrémité supérieure de celui-ci, et dont il est séparé par une collerette (le col demeure inchangé au cours du processus de formage du récipient), ainsi qu'un fond qui ferme le corps à une extrémité inférieure de celui-ci (et destiné à former le fond du récipient).

Pour former le récipient à partir de la préforme, on commence par chauffer le corps et le fond de la préforme à une température supérieure à la température de transition vitreuse de la matière (qui, pour le PET, est d'environ 80°C). On injecte ensuite un fluide (typiquement de l'air) sous pression dans la préforme, dont le corps subit une inflation à la fois axiale et radiale jusqu'à parvenir à la forme souhaitée pour le corps du récipient. Généralement, l'expansion axiale est réalisée par un étirage à l'aide d'une tige.

La chauffe est généralement conduite dans une unité de chauffe (également appelée four) équipée d'une pluralité de sources de rayonnement infrarouge auxquelles sont exposées les préformes. Ces sources sont en général des lampes halogènes, qui rayonnent sur un spectre assez large incluant l'infrarouge court (et éventuellement une partie de l'infrarouge moyen) ainsi qu'une une partie au moins du spectre visible. Les lampes halogènes ont comme principaux défauts une directivité faible (voire inexistante) et une durée de vie relativement courte.

Une technologie de chauffe alternative est en cours de développement, basée sur l'utilisation de sources de rayonnement monochromatique (ou quasi-monochromatique), qui offrent une meilleure directivité et une plus grande longévité, cf. par ex. la demande de brevet européen EP 2 720 842 (Sidel Participations), qui décrit un procédé de chauffe de préformes au moyen d'une matrice de diodes laser de type à cavité verticale émettant par la surface (VCSEL).

De nombreux tests de cette nouvelle technologie, conduits sur des préformes de toutes formes, ont montré qu'il est nécessaire d'en poursuivre la mise au point, car on note dans les préformes l'existence de zones de surchauffe de la matière, dont un réglage même fin de la distribution énergétique des sources ne permet pas de s'affranchir. Tout compte fait, il est apparu qu'il convenait de retravailler la silhouette et le dimensionnement des préformes.

Des préformes selon le préambule de la revendication 1 et des procédés de fabrication des récipients sont divulgués dans EP0978456A, DE3486209T et WO2012092639A2.

Un objectif est par conséquent de proposer une préforme qui, lorsqu'exposée à un rayonnement infrarouge monochromatique ou quasi-monochromatique, puisse être chauffée de manière relativement homogène, c'est-à-dire sans présenter de zones de surchauffe locale non désirée.

A cet effet, il est proposé, en premier lieu, une préforme selon la revendication 1.

Ces caractéristiques contribuent à minimiser la réfraction dans la matière, au bénéfice d'une meilleure qualité de chauffe.

Selon un mode particulier de réalisation :
0.65 ·*C* ≤ *C'* ≤ 0.85 · *C*

En outre, la préforme peut satisfaire la condition suivante :
*H* ≤ *G*
où *G* est l'épaisseur de paroi de la préforme mesurée à une extrémité inférieure de la portion concave ;
*H* est l'épaisseur de paroi de la préforme mesurée à une extrémité supérieure de la portion concave ;
avec, de préférence :
*H* ≤ 0.9 · *G*

La condition supplémentaire suivante peut être remplie :
*H* ≥ 0.5 · *G* avec, de préférence :
*H* ≥ 0.7 · *G*

Il est proposé, en deuxième lieu, un procédé de fabrication d'un récipient selon la revendication 7.

Ce procédé comprend avantageusement, entre la chauffe et le formage, l'introduction de la préforme dans un moule à l'empreinte du récipient.

D'autres objets et avantages de l'invention apparaîtront à la lumière de la description d'un mode de réalisation, faite ci-après en référence aux dessins annexés dans lesquels :
- la figure 1 est une vue en coupe d'une préforme de récipient, selon un premier mode de réalisation ;
- la figure 2 est une vue en coupe d'une préforme de récipient, selon un deuxième mode de réalisation ;
- la figure 3 est une vue en coupe d'une préforme de récipient, selon un troisième mode de réalisation ;
- la figure 4 est un schéma illustrant la fabrication d'un récipient à partir d'une préforme.

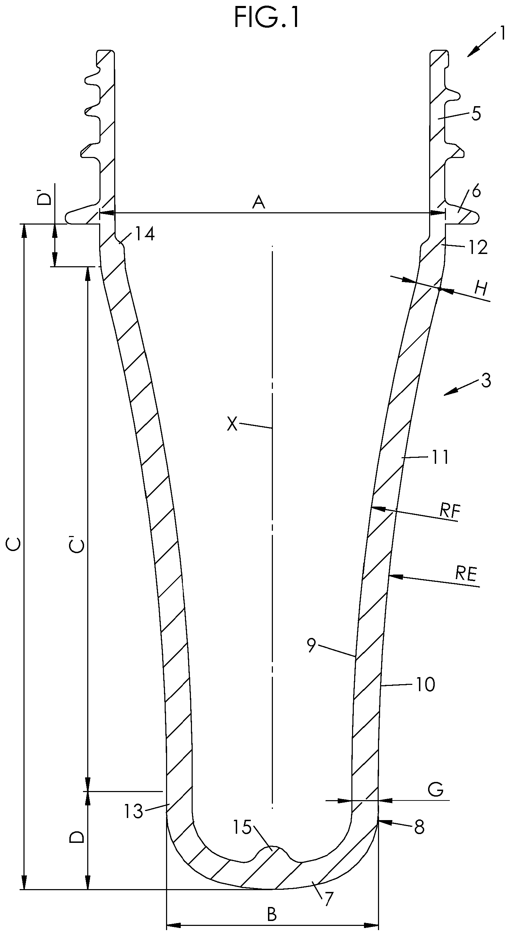

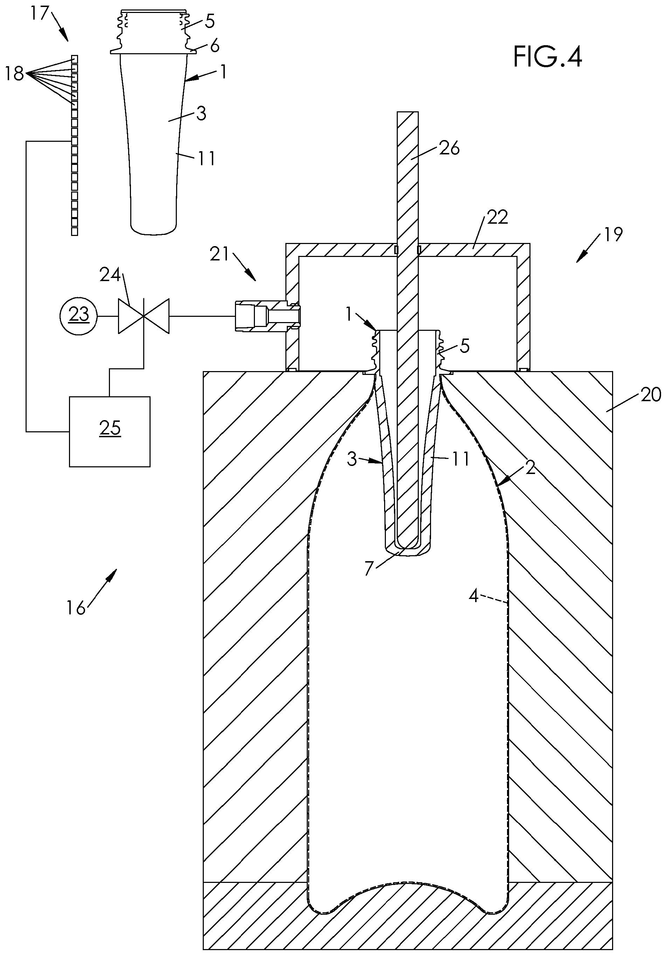

Sur chacune des figures 1, 2 et 3 est représentée une préforme **1** en matière plastique tel que PET (polytéréphtalate d'éthylène), à partir de laquelle un récipient **2** (tel qu'illustré en pointillés sur la figure 4) est destiné à être formé par soufflage ou étirage soufflage. Chaque préforme **1** comprend, en premier lieu, un corps **3** qui s'étend de manière symétrique de révolution autour d'un axe **X** central.

Le corps **3** de la préforme **1** est destiné à former un corps **4** du récipient **2**.

Chaque préforme **1** comprend, en deuxième lieu, un col **5** ouvert qui s'étend dans le prolongement du corps **3** à partir d'une extrémité supérieure de celui-ci. Le col **5** présente sa forme finale, qu'il est destiné à conserver tout au long du formage du récipient **2**.

Le col **5** se termine par une collerette **6** en saillie radiale, qui sépare le col **5** du corps **3** et par laquelle la préforme **1** (puis le récipient **2**) est suspendu(e) ou plus généralement tenu(e) pendant diverses opérations de convoyage, de chauffe ou de formage de la préforme **1** (puis, respectivement, de remplissage, bouchage et étiquetage du récipient **2**).

Chaque préforme **1** comprend, en troisième lieu, un fond **7** qui ferme le corps **3** à partir d'une extrémité **8** inférieure de celui-ci, c'est-à-dire que la matière du fond **7** s'étend à partir de l'extrémité **8** inférieure du corps **3** pour venir rejoindre radialement l'axe **X** central et fermer ainsi la préforme **1** à l'opposé du col **5**. Le corps **3** et le fond **7** sont symétriques de révolution autour de l'axe **X** central, c'est-à-dire qu'ils sont invariants dans tout plan de coupe longitudinale (autrement dit passant par l'axe **X** central, correspondant au plan de la feuille sur les figures).

La préforme **1** présente une face **9** interne et une face **10** externe.

Dans ce qui suit, les termes « concave » et « convexe » s'entendent en référence au volume interne de la préforme **1**. En d'autres termes, une zone est dite concave si sa concavité est tournée vers l'extérieur de la préforme **1**, et, inversement, convexe si sa convexité est tournée vers l'extérieur de la préforme **1**.

Comme on le voit sur chacune des figures 1, 2 et 3, le corps **3** de la préforme **1** présente une portion **11** concave en section axiale (c'est-à-dire dans tout plan de coupe contenant l'axe **X**, comme le plan de coupe des figures 1, 2 et 3).

Comme dans les exemples illustrés, le corps **3** de la préforme **1** peut en outre comprendre :
- une portion **12** haute de raccordement de la portion **11** concave à la collerette **6** et/ou
- une portion **13** basse de raccordement de la portion **11** concave au fond **7**.

La portion **12** haute de raccordement est avantageusement cylindrique sur la face **10** externe.

Quant à la portion **13** basse de raccordement, elle est avantageusement en légère dépouille, c'est-à-dire qu'elle s'appuie sur un cône dont le sommet est situé sur l'axe **X** à distance de la préforme **1**, du côté du fond **7**.

Pour les besoins du profilage et du dimensionnement de la préforme **1**, on note :
- *A*: le diamètre hors tout du corps **3**, mesuré sous la collerette **6** ;
- *B*: le diamètre externe du fond **7**, mesuré à la jonction avec le corps **3** (autrement dit, le diamètre hors tout du fond **7**) ;
- *C*: la hauteur cumulée du corps **3** (incluant la portion **11** concave, la portion **12** haute de raccordement et la portion **13** basse de raccordement) et du fond **7**, mesurée axialement (c'est-à-dire parallèlement à l'axe **X**) ;
- *C'*: la hauteur de la portion **11** concave du corps **3**, mesurée axialement (c'est-à-dire parallèlement à l'axe **X**) ;
- *D*: la hauteur cumulée du fond **7** et de la portion **13** basse de raccordement, mesurée axialement ;
- *D'*: la hauteur de la portion **12** haute de raccordement, mesurée axialement ;
- *RE*: le rayon moyen de courbure de la portion **11** concave, mesurée sur la face **10** externe et dans un plan de coupe longitudinale ;
- *RF*: le rayon moyen de courbure de la portion **11** concave, mesurée sur la face **9** interne et dans un plan de coupe longitudinale ;
- *G*: l'épaisseur de paroi de la préforme **1**, mesurée à une extrémité inférieure de la portion **11** concave (à la jonction avec la portion **13** basse de raccordement) ;
- *H*: l'épaisseur de paroi de la préforme **1**, mesurée à une extrémité supérieure de la portion **11** concave (à la jonction avec la portion **12** haute de raccordement).

Les diamètres *A* et *B* sont choisis de manière que :
*B* ≤ 0.9 · *A*

En outre, la hauteur *C*' de la portion **11** concave du corps **3** est choisie de manière que :
0.5 · *C* ≤ *C'* ≤ 0.95 · *C* et la portion (11) concave présente, en section axiale, sur une face (10) externe, un rayon RE de courbure externe tel que :
*1.5·C* ≤ *RE* ≤ *10·C*.

De préférence, la hauteur *C'* de la portion **11** concave du corps **3** est choisie de manière que :
0.65·*C* ≤ *C'* ≤ 0.85·*C*

Ainsi, d'une part, la portion **11** concave du corps **3** apparaît en nette dépouille (par comparaison avec une préforme ordinaire à corps sensiblement cylindrique), et, d'autre part, cette portion **11** concave s'étend sur une fraction importante de la hauteur totale de la préforme **1** (hors col).

Il en résulte, par rapport à une préforme ordinaire à corps sensiblement cylindrique, une meilleure réponse thermique lors d'une chauffe réalisée au moyen de sources de rayonnement infrarouge monochromatiques ou quasi-monochromatiques (notamment de sources laser). En particulier, la réfraction est minimisée, au bénéfice d'un meilleur contrôle de la chauffe, et le risque d'apparition de zones de surchauffe est limité.

Pour optimiser encore la réponse thermique, d'autres paramètres, parmi ceux listés ci-dessus, peuvent être dimensionnés de manière particulière.

Ainsi, l'épaisseur de paroi du corps **3** est de préférence sensiblement constante sur toute la hauteur de la portion **11** concave, ou décroissante de manière continue pour éviter toute arête ou rupture brusque de courbure.

En outre, l'épaisseur *H* de paroi à l'extrémité supérieure de la portion **11** concave est avantageusement inférieure à l'épaisseur *G* de paroi à l'extrémité inférieure de la portion **11** concave :
*H* ≤ *G*

Avec, de préférence :
*H* ≤ 0.9 · *G*

Il est cependant préférable que la différence d'épaisseur à l'extrémité inférieure et à l'extrémité supérieure de la portion **11** ne soit pas trop importante :
*H* ≥ 0.5 · *G*

Avec, de préférence :
*H* ≥ 0.7 · *G*

Comme la préforme **1** est sensiblement plus épaisse au niveau du corps **3** qu'au niveau du col **5**, il est prévu, pour rattraper cette différence d'épaisseur, un décrochement **14** sur la face **9** interne à hauteur de la collerette **6**.

Comme le col **5** ne doit pas être chauffé, la présence de ce décrochement **14** n'a pas d'incidence sur la qualité globale de la chauffe de la préforme **1**.

On a représenté respectivement sur les figures 1, 2 et 3 trois préformes **1** de formes différentes mais satisfaisant l'ensemble des critères définis ci-dessus.

Le tableau ci-dessous fournit les valeurs numériques (toutes exprimées en mm) des paramètres listés ci-dessus, pour ces trois préformes **1** :

| | Figure 1 | Figure 2 | Figure 3 |
|---|---|---|---|
| *A* | 24 | 26 | 35,5 |
| *B* | 14,5 | 17,5 | 20,7 |
| *C* | 46 | 70 | 39 |
| *C'* | 36 | 59 | 31 |
| *D* | 7 | 7 | 5 |
| *D'* | 3 | 4 | 3 |
| *RE* | 140 | 450 | 68 |
| *RF* | 136 | 305 | 67 |
| *G* | 1,8 | 3,7 | 2 |
| *H* | 1,6 | 3 | 2 |

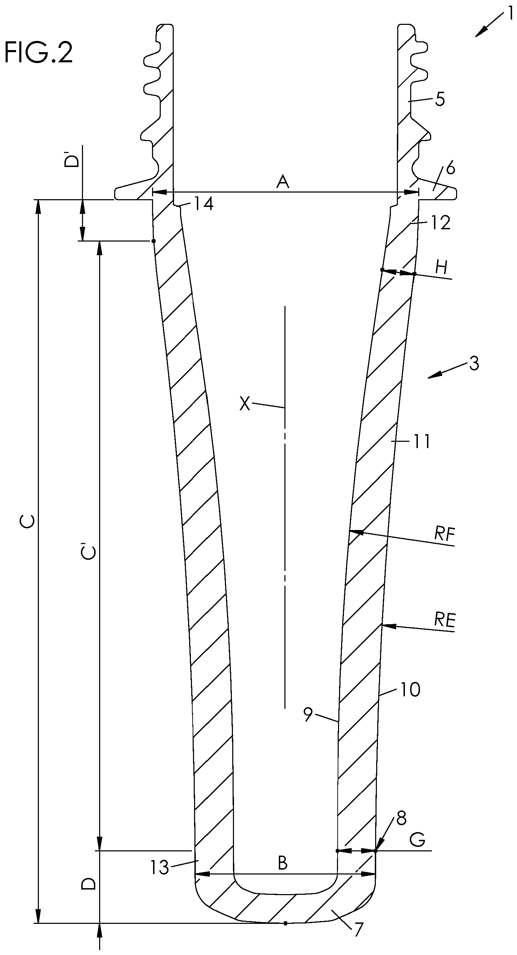

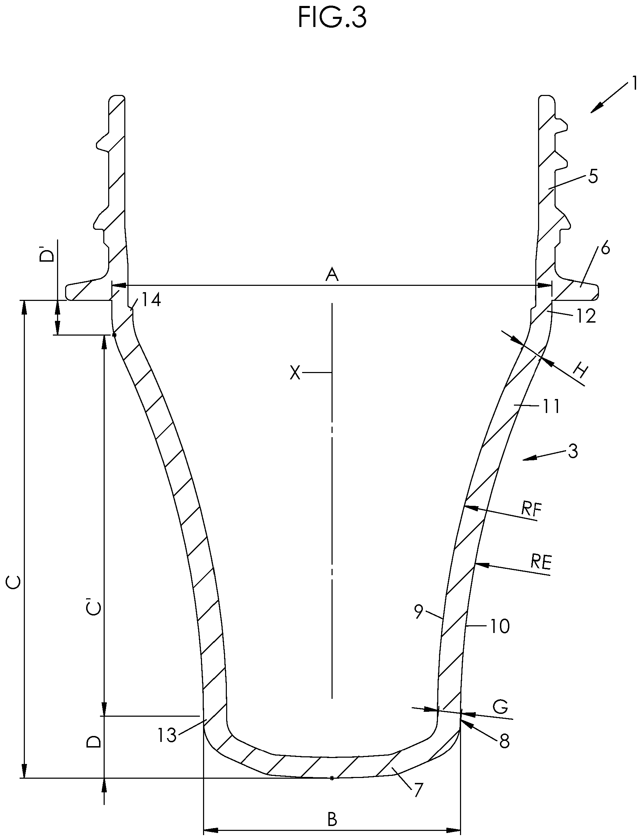

La préforme **1** de la figure 1 se distingue des préformes des figures 2 et 3 par un fond **7** de forme sensiblement hémisphérique ainsi que par la présence, au centre du fond **7**, d'un pion **15** de centrage faisant saillie de la face **9** interne vers l'intérieur. Ce pion **15** est destiné à venir s'emboîter dans une cavité complémentaire formée à une extrémité d'une tige d'étirage pour garantir le centrage de la préforme **1** pendant le formage du récipient **2**.

En revanche, le fond **7** des préformes **1** des figures 2 et 3 est sensiblement plat. Cette forme a l'avantage de minimiser la réfraction du rayonnement transmis par la matière de la préforme **1**, au bénéfice d'un meilleur contrôle de la chauffe.

On a très schématiquement représenté sur la figure 4 une installation **16** pour la fabrication d'un récipient **2** à partir d'une préforme **1** telle que décrite ci-dessus.

Cette installation **16** comprend une unité **17** de chauffe pourvue d'une pluralité de sources **18** de rayonnement électromagnétique monochromatique ou quasi-monochromatique dans le domaine de l'infrarouge.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle étant au mieux quasi-monochromatique, c'est-à-dire que son spectre en fréquence s'étend sur une bande de largeur spectrale faible mais non nulle, centrée sur une fréquence principale où l'intensité du rayonnement est maximale.

Les sources **18** sont de préférence organisées en matrice ; il s'agit par exemple de diodes laser de type VCSEL, émettant chacune un rayonnement d'une puissance de quelques dizaines de milliwatts à une longueur d'onde de l'ordre de 1 µm.

L'installation **16** comprend également une unité **19** de formage incluant au moins un moule **20** à l'empreinte du récipient **2**. En pratique, l'unité **19** de formage peut comprendre une série de moules **20** montés sur un carrousel tournant. L'unité de formage **19** comprend, pour chaque moule, un dispositif **21** d'injection comprenant une tuyère **22** apte à être appliquée de manière étanche contre une face supérieure du moule **20** et reliée à une source **23** de fluide sous pression (par ex. de l'air) via un distributeur **24** (par ex. une électrovanne). L'installation comprend en outre une unité **25** de contrôle reliée aux sources **23** et au distributeur **24** pour en commander respectivement le réglage de pression, leur ouverture et leur fermeture.

Dans l'exemple illustré, l'unité **19** de formage comprend en outre, pour chaque moule **20**, une tige **26** montée coulissante par rapport au moule **20** pour assurer, en même temps que le soufflage, un étirage de la préforme **1**.

Ainsi, pour former un récipient **2**, on procède comme suit.

On commence par fournir une préforme **1** telle que décrite ci-dessus, à partir d'un conteneur par exemple, dans lequel sont stockées des préformes toutes identiques.

Le corps **3** et le fond **7** de la préforme **1** sont alors chauffés au sein de l'unité **17** de chauffe par exposition à un rayonnement infrarouge monochromatique ou quasi-monochromatique d'intensité prédéterminée émis par les sources **18**. Pendant la chauffe, la préforme **1** est mis en rotation autour de son axe **X** afin d'assurer une exposition homogène de son corps **3** et de son fond **7** au rayonnement.

Compte tenu de sa forme et de son dimensionnement, tels que décrit ci-dessus, on observe que la préforme **1** réfracte peu le rayonnement qu'elle reçoit. Il en résulte une meilleure distribution énergétique dans la matière, un meilleur contrôle de la chauffe, et une meilleure correspondance entre le profil de puissance réglé au niveau des sources **18**, et le profil thermique constaté (par ex. au moyen d'une caméra thermique) sur la préforme **1**.

Puis la préforme **1** ainsi chauffée est introduite dans le moule **20** et le récipient **2** est formé injection dans la préforme **1** d'un fluide sous pression (par ex. de l'air) en provenance de la source **23**.

Le formage par injection peut comprendre une étape d'étirage axial de la préforme **1** à l'aide d'une tige (cf. la tige **26** sur la figure 4).

En variante, le formage pourrait être conduit librement, c'est-à-dire sans moule.

## Revendications

1. Préforme (**1**) de récipient en matière plastique, qui comprend :
- un corps (**3**) symétrique de révolution autour d'un axe (**X**) central ;
- un col (**5**) ouvert qui s'étend dans le prolongement du corps (**3**) dont il est séparé par une collerette (**6**) en saillie radiale ;
- un fond (**7**) qui ferme le corps (**3**) à l'opposé du col (**5**) ;
cette préforme (**1**) étant **caractérisée en ce que** le corps (**3**) présente une portion (**11**) concave en section axiale et **en ce que** :
*B* ≤ 0.9 · *A*
0.5 · *C* ≤ *C'* ≤ 0.95 · *C*
où *A* est le diamètre hors tout du corps (**3**), mesuré sous la collerette (**6**) ;
*B* est le diamètre externe du fond (**7**), mesuré à sa jonction avec le corps (**3**) ;
*C* est la hauteur cumulée du corps (**3**) et du fond (**7**), mesurée à partir de la collerette (**6**) ;
*C'* est la hauteur, mesurée axialement, de la portion (**11**) concave du corps (**3**),
et **en ce que** la portion (11) concave présente, en section axiale, sur une face (10) externe, un rayon *RE* de courbure externe tel que :
*1.5·C ≤RE≤ 10·C*

2. Préforme (**1**) selon la revendication 1, **caractérisée en ce que** :
0.65 · *C* ≤ *C'* ≤ 0.85 · *C*

3. Préforme (**1**) selon l'une des revendications précédentes, **caractérisée en ce que** :
*H* ≤ *G*
où *G* est l'épaisseur de paroi de la préforme (**1**) mesurée à une
extrémité inférieure de la portion (**11**) concave ;
*H* est l'épaisseur de paroi de la préforme (**1**) mesurée à une extrémité supérieure de la portion (**11**) concave.

4. Préforme (**1**) selon la revendication 3, **caractérisée en ce que** :
*H* ≤ 0.9 · *G*

5. Préforme (**1**) selon la revendication 3 ou la revendication 4, **caractérisée en ce que** :
*H ≥* 0.5 · *G*

6. Préforme (**1**) selon la revendication 5, **caractérisée en ce que** :
*H ≥* 0.7 *· G*

7. Procédé de fabrication d'un récipient (**2**) par soufflage ou étirage soufflage, qui comprend :
- la fourniture d'une préforme (**1**) selon l'une des revendications précédentes ;
- la chauffe du corps (**3**) de la préforme (**1**) par exposition à un rayonnement infrarouge monochromatique ou quasi-monochromatique d'intensité prédéterminée ;
- le formage du récipient (**2**) par injection d'un fluide sous pression dans la préforme (**1**) ainsi chauffée.

8. Procédé selon la revendication 7, **caractérisé en ce qu'**il comprend, entre la chauffe et le formage, l'introduction de la préforme (**1**) dans un moule (**20**) à l'empreinte du récipient (**2**).

## Patentansprüche

1. Vorform (1) eines Kunststoffbehälters, die enthält:
- einen um eine Mittelachse (X) rotationssymmetrischen Körper (3);
- einen offenen Hals (5), der sich in der Verlängerung des Körpers (3) erstreckt, von dem er durch einen radial vorstehenden Kragen (6) getrennt ist;
- einen Boden (7), der den Körper (3) entgegengesetzt zum Kragen (5) verschließt;
wobei diese Vorform (1) **dadurch gekennzeichnet ist, dass** der Körper (3) einen im Axialschnitt konkaven Abschnitt (11) aufweist, und dass gilt:
B ≤ 0,9 · A
0,5 · C ≤ C' ≤ 0,95 · C
wobei
A der Gesamtdurchmesser des Körpers (3) gemessen unter dem Kragen (6) ist;
B der Außendurchmesser des Bodens (7) gemessen an seiner Verbindung mit dem Körper (3) ist;
C die kumulierte Höhe des Körpers (3) und des Bodens (7) gemessen ausgehend vom Kragen (6) ist;
C' die axial gemessene Höhe des konkaven Abschnitts (11) des Körpers (3) ist,
und dass der konkave Abschnitt (11) im Axialschnitt an einer Außenseite (10) einen äußeren Krümmungsradius RE derart aufweist, dass gilt:
1,5 · C ≤ RE ≤ 10 · C.

2. Vorform (1) nach Anspruch 1, **dadurch gekennzeichnet, dass** gilt:
0, 65 · C ≤ C' ≤ 0,85 · C.

3. Vorform (1) nach einem der vorhergehenden Ansprüche, **dadurch gekennzeichnet, dass** gilt:
H ≤ G
wobei
G die Wanddicke der Vorform (1) gemessen an einem unteren Ende des konkaven Abschnitts (11) ist;
H die Wanddicke der Vorform (1) gemessen an einem oberen Ende des konkaven Abschnitts (11) ist.

4. Vorform (1) nach Anspruch 3, **dadurch gekennzeichnet, dass** gilt:
H ≤ 0,9 · G.

5. Vorform (1) nach Anspruch 3 oder Anspruch 4, **dadurch gekennzeichnet, dass** gilt:
H ≥ 0,5 · G.

6. Vorform (1) nach Anspruch 5, **dadurch gekennzeichnet, dass** gilt:
H ≥ 0,7 · G.

7. Verfahren zur Herstellung eines Behälters (2) durch Blasen oder Streckblasen, das enthält:
- das Bereitstellen einer Vorform (1) nach einem der vorhergehenden Ansprüche;
- das Erwärmen des Körpers (3) der Vorform (1) durch monochromatische oder quasi-monochromatische Infrarotstrahlungsexposition vorbestimmter Stärke;
- das Formen des Behälters (2) durch Einspritzen eines Druckfluids in die so erwärmte Vorform (1).

8. Verfahren nach Anspruch 7, **dadurch gekennzeichnet, dass** es zwischen dem Erwärmen und dem Formen die Einführung der Vorform (1) in eine Form (20) mit der Hohlform des Behälters (2) enthält.

## Claims

1. Preform (1) for container made of plastic material, which comprises:
- a body (3) symmetric in revolution about a central axis (X);
- an open neck (5) which extends in the extension of the body (3), from which it is separated by a radially projecting collar (6);
- a bottom (7) which closes the body (3) at the opposite end from the neck (5);
this preform (1) being **characterized in that** the body (3) has a portion (11) that is concave in axial section, and **in that**:
*B* ≤ *0.9 · A*
*0.5·C* ≤ *C'* ≤ *0.95·C*
where *A* is the overall diameter of the body (3), measured beneath the collar (6);
*B* is the external diameter of the bottom (7), measured at its junction with the body (3) ;
*C* is the combined height of the body (3) and the bottom (7), measured from the collar (6);
*C'* is the height, measured axially, of the concave portion (11) of the body (3),
and **in that** the concave portion (11) has, in axial section, on an outer face (10), an external radius of curvature RE such that:
*1.5·C* ≤ *RE* ≤ *10·C.*

2. Preform (1) according to Claim 1, **characterized in that**:
*0.65·C* ≤ *C'* ≤ *0.85·C.*

3. Preform (1) according to either of the preceding claims, **characterized in that**:
*H* ≤ *G*
where *G* is the thickness of the wall of the
preform (1) measured at a lower end of the concave portion (11);
*H* is the thickness of the wall of the preform (1) measured at an upper end of the concave portion (11).

4. Preform (1) according to Claim 3, **characterized in that**:
*H* ≤ *0.9·G.*

5. Preform (1) according to Claim 3 or Claim 4, **characterized in that**:
*H ≥ 0.5·G.*

6. Preform (1) according to Claim 5, **characterized in that**:
*H ≥ 0.7·G.*

7. Method for producing a container (2) by blow-moulding or stretch-blow-moulding, which comprises the following steps:
- providing a preform (1) according to one of the preceding claims;
- heating the body (3) of the preform (1) by exposure to monochromatic or quasi-monochromatic infrared radiation of predetermined intensity;
- forming the container (2) by injecting a pressurized fluid into the preform (1) heated in this manner.

8. Method according to Claim 7, **characterized in that** it comprises, between the steps of heating and forming, the step of introducing the preform (1) into a mould (20) having the shape of the container (2) .
